# EUROPÄISCHE PATENTANMELDUNG

(11) **EP 4 796 911 A1**
(43) Veröffentlichungstag der Anmeldung: **26.08.2026**
(21) Anmeldenummer: 26150478.1
(22) Anmeldetag: 07.01.2026
(51) Int. Cl.: G01N 1/02, G01N 1/04, G01N 1/12

(54) **PROBENNEHMER, PROBENENTNAHMEVERFAHREN UND VERFAHREN ZUM REINIGEN EINES PROBENNEHMERS**

(30) Priorität: 25.02.2025 DE 102025107121
(71) Anmelder: Bürkle GmbH, 79415 Bad Bellingen (DE)
(72) Erfinder: Breitmoser, Ralf, 79219 Staufen (DE)
(74) Vertreter: Kilian Kilian & Partner mbB

(57) **Zusammenfassung**

Die Erfindung betrifft einen Probenehmer zur Entnahme einer Probe, wobei der Probenehmer aufweist: ein längliches Probenaufnahmeelement, welches zumindest eine Probenaufnahmekammer aufweist, ein hohlzylindrisches Rohrelement, welches zumindest eine Öffnung aufweist und das Probenaufnahmeelement in einem Innenraum um eine Längsachse des Probenehmers derart drehbar gelagert aufnimmt, dass bei Relativdrehung zwischen dem Probenaufnahmeelement und dem Rohrelement eine Probe über die Öffnung in die Probenaufnahmekammer gelangen kann und/oder die Öffnung verschlossen werden kann, einen Griff, der mit dem Probenaufnahmeelement derart gekoppelt ist, dass eine Drehbewegung des Griffs um die Längsachse in eine Drehbewegung des Probenaufnahmeelements umgesetzt wird, und weiterhin derart mit dem Probenaufnahmeelement gekoppelt ist, dass eine Relativbewegung des Griffs in Bezug auf das Probenaufnahmeelement in die Längsrichtung ermöglicht wird, und einen Verriegelungsmechanismus, der eingerichtet ist, eine Drehbewegung des Griffs in Bezug auf Rohrelement zu blockieren, wenn sich der Griff in einer Verriegelungsstellung befindet, und weiter eingerichtet ist, eine Drehbewegung des Griffs in Bezug auf Rohrelement zuzulassen, wenn der Griff von der Verriegelungsstellung in eine Zwischenstellung durch Relativbewegung des Griffs in Bezug auf das Probenaufnahmeelement und/oder das Rohrelement in die Längsrichtung verstellt wird.

Weiterhin beziehst sich die Erfindung auf ein Probeentnahmeverfahren unter Verwendung eines solchen Probenehmers sowie ein Verfahren zur Reinigung eines solchen Probenehmers.

## Beschreibung

Die Erfindung betrifft einen Probenehmer zur Entnahme einer Probe, vorzugsweise einer flüssigen, pulverförmigen oder granulatförmigen Probe, sowie ein Probeentnahmeverfahren mittels eines solchen Probenehmers.

Weiterhin bezieht sich die Erfindung auf ein Verfahren zum Reinigen eines Probenehmers.

Herkömmlicherweise können zur Entnahme von flüssigen, pulverförmigen bzw. feinkörnigen oder granulatförmigen bzw. grobkörnigen Proben aus einem Probengut bzw. einer Probengesamtmenge unterschiedlichste Probenehmer eingesetzt werden. Je nach Anwendungsfall unterscheiden sich diese in ihrer Gestaltung bzw. Dimensionierung.

Die primäre Funktion einer Probenentnahme besteht häufig darin, dem Probengut bzw. der Probengesamtmenge eine für die Analyse erforderliche repräsentative Probe zu entnehmen, beispielsweise eine Probe kontaminationsfrei zu entnehmen. Anschließend können, z.B. durch eine Analyse im Labor, zuverlässige Aussagen über die Qualität, Beschaffenheit oder Zusammensetzung der Probe und damit Rückschlüsse auf das Probengut gezogen werden.

Herkömmliche Probenehmer zur beispielsweise kontaminationsfreien Entnahme einer Probe sind unter anderem so konstruiert, dass zumindest bei bestimmungsgemäßem Gebrauch des Probenehmers eine berührungslose Probenentnahme, d.h. ohne, dass der Probenehmende mit der Probe in Berührung kommt, gewährleistet ist, um eine Kontamination der Probe zu vermeiden. Eine berührungslose Probenentnahme ist insbesondere auch dann von Bedeutung, wenn die Probe ein für den Menschen oder die Umwelt potenziell gefährliches bzw. gesundheitsschädliches Material umfasst. Dabei muss die Probe hierbei so entnommen werden können, dass kein Material verschüttet wird oder ausläuft.

In diesem Zusammenhang sind aus dem Stand der Technik Probenehmer in Form sogenannter Probenstecher bekannt. Dabei handelt es sich beispielsweise um einen stabförmigen Probenehmer mit einer Außenhülle (Außenrohr) und einem Probenstab (Innenrohr), wobei bei dem Probenehmer der Probenstab und die Außenhülle konzentrisch angeordnet und gegeneinander verdrehbar sind. Der Probenstab weist dabei Aussparungen bzw. Vertiefungen (Probenaufnahmekammern) auf, die bestimmungsgemäß zur Aufnahme der Probe eingerichtet sind, wobei die Außenhülle entsprechende Öffnungen hat, sodass, wenn der Probenstecher in das Probengut bzw. Probengesamtmenge eingeführt ist und Probenstab und Außenhülle in Bezug aufeinander entsprechend verdreht sind, die Probe durch die Öffnungen der Außenhülle in die Aussparungen des Probenstabs gelangen kann. Danach wird der Probenstab (erneut) verdreht, sodass die Außenhülle zum Abschluss bzw. Verschließen der Aussparungen des Probenstabs dient.

Wenn derartige Probenstecher mehrere Probenaufnahmekammern aufweisen, beispielsweise in Umfangsrichtung und in Längsrichtung des Probestechers versetzt angeordnete Probenaufnahmekammern aufweisen, welche in einer bestimmten Abfolge zu befüllen und ggfs. auch zu verschließen sind, ist es oft erforderlich, eine Zwangsführung vorzusehen; diese gibt beispielsweise anhand einer Zwangsführungsnut in dem Außenrohr und einem in der Zwangsführungsnut geführten Vorsprung/Zapfen in dem Innenrohr exakt Bewegungsmöglichkeiten vor, um den Probenstecher in bestimmte Stellungen zum Befüllen oder Verschließen der Probenaufnahmekammern versetzen zu können, und auch um die Probenaufnahmekammern in vorgegebener Abfolge befüllen und verschließen zu können.

Bei solchen Probenstechern befindet sich die Öffnung bzw. Probenöffnung an einer definierten Stelle am Probenehmer bzw. am Außenrohr. Entsprechend der Zwangsführung werden die im Innenrohr ausgebildeten Probenaufnahmekammern axial verschoben, um bei der Ausführung der Beprobung deckungsgleich mit der Probenöffnung im Außenrohr zu sein. Dementsprechend befindet sich die Probenöffnung in einem großen Abstand zu der vordersten Spitze bzw. dem Spitzenabschnitt des Probenehmers, da die hintereinanderliegenden, axial versetzten Probenkammern im Außenrohr aufgenommen werden müssen. Durch diese Vorgabe anhand der Zwangsführung wird die Handhabung des Probenstechers allerdings beeinträchtigt und eine bodennahe Probenahme ist somit nur bedingt möglich.

Der Erfindung liegt daher die Aufgabe zugrunde, die herkömmlichen Probenehmer sowie Probeentnahmeverfahren derart weiterzubilden, dass die Handhabung im Zusammenhang mit der Probenahme und/oder der Reinigung erleichtert bzw. vereinfacht wird.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Der erfindungsgemäße Probenehmer ist zur Entnahme einer Probe, vorzugsweise einer flüssigen, pulverförmigen oder granulatförmigen Probe, eingerichtet, wobei der Probenehmer aufweist: ein längliches Probenaufnahmeelement (Innenrohr), welches zumindest eine Probenaufnahmekammer aufweist, ein hohlzylindrisches Rohrelement (hohlzylindrisches Außenrohr), welches zumindest eine Öffnung aufweist und das Probenaufnahmeelement in einem Innenraum um eine Längsachse des Probenehmers derart drehbar gelagert aufnimmt, dass bei Relativdrehung zwischen dem Probenaufnahmeelement und dem Rohrelement eine Probe über die Öffnung in die Probenaufnahmekammer gelangen kann und/oder die Öffnung verschlossen werden kann, einen Griff, der mit dem Probenaufnahmeelement derart gekoppelt ist, dass eine Drehbewegung des Griffs um die Längsachse in eine Drehbewegung des Probenaufnahmeelements umgesetzt wird, und weiterhin derart mit dem Probenaufnahmeelement gekoppelt ist, dass eine Relativbewegung des Griffs in Bezug auf das Probenaufnahmeelement in Richtung der Längsachse ermöglicht wird, und einen Verriegelungsmechanismus, der eingerichtet ist, eine Drehbewegung des Griffs in Bezug auf Rohrelement zu blockieren, wenn sich der Griff in einer Verriegelungsstellung befindet, und weiter eingerichtet ist, eine Drehbewegung des Griffs in Bezug auf Rohrelement zuzulassen, wenn der Griff von der Verriegelungsstellung in eine Zwischenstellung durch Relativbewegung des Griffs in Bezug auf das Probenaufnahmeelement und/oder das Rohrelement in Richtung der Längsachse (Längsrichtung des Probenehmers) verstellt wird.

Anhand des erfindungsgemäßen Probenehmers ist die Ausbildung der Probenöffnung (Öffnung im Außen) nahe an der Spitze bzw. am Spitzenabschnitt des Probenehmers möglich. Daher wird auch eine bodennahe Probenahme ermöglicht. Zusätzlich wird auch die Handhabung des erfindungsgemäßen Probenehmers verbessert, da eine Einschränkung der Bewegungsmöglichkeiten des Innenrohrs in Bezug auf das Außenrohr mittels einer Zwangsführung nicht in dem Maße erfolgt wie beim Stand der Technik.

Der erfindungsgemäße Probenehmer kann in vorteilhafter Weise so ausgebildet sein, dass der Verriegelungsmechanismus einen griffseitigen Verriegelungsvorsprung und eine rohrelementseitige Steuerbahn aufweist, wobei die Steuerbahn die Verriegelungsstellung festlegt, indem der Verriegelungsvorsprung in eine Verriegelungsausnehmung der Steuerbahn eingreift, und die Zwischenstellung festlegt, indem der Verriegelungsvorsprung auf der Steuerbahn gleitend geführt wird. Selbstverständlich ist in einer alternativen Ausführungsform auch denkbar, den Verriegelungsvorsprung rohrelementseitig und die Steuerbahn griffseitig vorzusehen.

Weiterhin kann der erfindungsgemäße Probenehmer derart verwirklicht werden, dass der Verriegelungsmechanismus mehrere Verriegelungsstellungen und jeweilige zwischen den Verriegelungsstellungen liegende Zwischenstellungen festlegt, wobei eine jeweilige Verriegelungsstellung einer Stellung des Griffs zu dem Rohrelement entspricht, bei dem eine Probe über die Öffnung in die Probenaufnahmekammer gelangen kann oder die Öffnung verschlossen ist.

Darüber hinaus kann der erfindungsgemäße Probenehmer so umgesetzt werden, dass das Probenaufnahmeelement in Umfangsrichtung beabstandet und Längsrichtung in gleicher axialer Anordnung mehrere Probenaufnahmekammern und zumindest einen Verschlussabschnitt aufweist.

Überdies kann der erfindungsgemäße Probenehmer derart weitergebildet werden, dass der Verriegelungsmechanismus einen Vorspannmechanismus aufweist, der zumindest abschnittsweise den Griff in Richtung des Rohrelements vorspannt.

Ferner kann der erfindungsgemäße Probenehmer so realisiert werden, dass der Vorspannmechanismus durch ein Verbindungselement, einen Griffabschnitt, insbesondere einem zweiten Griffabschnitt, des Griffs und ein Federelement gebildet wird, wobei das Verbindungselement einen probenaufnahmeelementseitigen Endabschnitt und einen griffseitigen Endabschnitt aufweist, wobei der probenaufnahmeelementseitige Endabschnitt mit dem Probenaufnahmeelement drehfest (über eine formschlüssige Verbindung) verbunden ist und in dem Rohrelement drehbeweglich gelagert und axial in Richtung des Griffs unbeweglich festgelegt ist, wobei der griffseitige Endabschnitt mit dem Griffabschnitt derart zusammenwirkt, dass der Endabschnitt axial beweglich und drehfest in Bezug auf den Griffabschnitt gelagert ist und zwischen dem griffseitigen Endabschnitt und einem Absatz des Griffabschnitts das Federelement derart angeordnet ist, dass bei Relativbewegung zwischen dem griffseitigen Endabschnitt und dem Griffabschnitt das Federelement komprimiert oder expandiert werden kann.

Des Weiteren kann der erfindungsgemäße Probennehmer derart ausgestaltet sein, dass der Griff weiter einen Druckabschnitt aufweist, der mit dem Verbindungselement starr verbunden ist und relativ zu dem Griff derart beweglich ist, dass bei Relativbewegung des Druckabschnitts relativ zu dem Griff das Federelement komprimiert oder expandiert wird. Dadurch lässt sich beispielsweise bei demontierter Spitze des Probenehmers das Probenaufnahmeelement zusammen mit dem Druckabschnitt axial bewegen und zumindest teilweise aus dem Außenrohr herausführen, wenn der Druckabschnitt in Richtung des Außenrohrs relativ zu dem Griff und zu dem Außenrohr bewegt wird.

Weiterhin kann der erfindungsgemäße Probenehmer so umgesetzt sein, dass das Rohrelement an einem Ende mit dem Griff und an einem anderen Ende mit einem demontierbaren Spitzenabschnitt vorgesehen ist, der bestimmungsgemäß bei Entnahme der Probe zuerst in die die Probe enthaltende Probenmenge eingeführt wird, wobei das Probenaufnahmeelement bei demontierten Spitzenabschnitt aus dem Rohrelement entnehmbar ist.

Das erfindungsgemäße Probenentnahmeverfahren zur Entnahme einer Probe, insbesondere einer flüssigen, pulverförmigen oder granulatförmigen Probe, aus einer Probengesamtmenge unter Verwendung des erfindungsgemäßen Probenehmers umfasst die folgenden Schritte:
Einführen des Probenehmers in die Probengesamtmenge, während sich der Griff in der Verriegelungsstellung befindet und die Öffnung verschlossen ist,
Bewegen des Griffs zumindest in Richtung der Längsachse relativ zu dem Probenaufnahmeelement in eine Zwischenstellung;
Drehen des Griffs in eine weitere Verriegelungsstellung, so dass die Probenaufnahmekammer über die Öffnung zur Entnahme der Probe zugänglich ist;
Einbringen der Probe in die Probeaufnahmekammer;
Bewegen des Griffs zumindest in Richtung der Längsachse relativ zu dem Probenaufnahmeelement in eine Zwischenstellung;
Drehen des Griffs relativ zu dem Rohrelement, so dass die Öffnung verschlossen ist oder eine weitere Probenaufnahmekammer über die Öffnung zur Entnahme der Probe zugänglich ist.

Sofern die Probenahme abgeschlossen ist, kann der Probenehmer bei geschlossener Öffnung schließlich aus der Probengesamtmenge herausgeführt werden.

Dadurch ergeben sich die im Zusammenhang mit dem erfindungsgemäßen Probenehmer erläuterten Eigenschaften und Vorteile auf gleiche oder ähnliche Weise, weshalb zur Vermeidung von Wiederholungen auf die vorstehenden Ausführungen im Zusammenhang mit dem erfindungsgemäßen Probenehmer verwiesen wird.

Das erfindungsgemäße Verfahren zum Reinigen des erfindungsgemäßen Probenehmers ist vorzugsweise zum Reinigen des Probenehmers nach Durchführung einer Probenahme nach dem erfindungsgemäßen Probenentnahmeverfahren vorgesehen und umfasst die folgenden Schritte: Drücken des Druckabschnitts des Griffs, so dass sich der Druckabschnitt relativ zu dem Rohrelement in Richtung des Rohrelements bewegt, wodurch das Probeaufnahmeelement zumindest teilweise aus dem Rohrelement herausgeschoben wird.

Dadurch ergeben sich die im Zusammenhang mit dem erfindungsgemäßen Probenehmer erläuterten Eigenschaften und Vorteile auf gleiche oder ähnliche Weise, weshalb zur Vermeidung von Wiederholungen auf die vorstehenden Ausführungen im Zusammenhang mit dem erfindungsgemäßen Probenehmer verwiesen wird.

Ein weiterer erfindungsgemäßer Probenehmer zur Entnahme einer Probe, vorzugsweise einer flüssigen, pulverförmigen oder granulatförmigen Probe, umfasst: ein längliches Probenaufnahmeelement, welches zumindest eine Probenaufnahmekammer aufweist, ein hohlzylindrisches Rohrelement, welches zumindest eine Öffnung aufweist und das Probenaufnahmeelement in einem Innenraum um eine Längsachse des Probenehmers derart drehbar gelagert aufnimmt, dass bei Relativdrehung zwischen dem Probenaufnahmeelement und dem Rohrelement eine Probe über die Öffnung in die Probenaufnahmekammer gelangen kann und/oder die Öffnung verschlossen werden kann, einen Griff, der mit dem Probenaufnahmeelement derart gekoppelt ist, dass eine translatorische relative Bewegung des Griffs entlang der Längsachse in Bezug auf das Probenaufnahmeelement in eine Drehbewegung des Probenaufnahmeelements, vorzugsweise mittels eines Gewindetriebs mit zumindest teilweise als Gewindewelle ausgebildetem Griff und zumindest teilweise als Innengewindespindel ausgebildetem Probenaufnahmeelement, umgesetzt wird.

Dadurch ergeben sich die im Zusammenhang mit dem erfindungsgemäßen Probenehmer erläuterten Eigenschaften und Vorteile auf gleiche oder ähnliche Weise, weshalb zur Vermeidung von Wiederholungen auf die vorstehenden Ausführungen im Zusammenhang mit dem erfindungsgemäßen Probenehmer verwiesen wird.

Eine bevorzugte Ausführungsform der Erfindung wird nachfolgend anhand der Figuren beispielhaft erläutert.

### Es zeigen:

- Fig. 1: eine schematische Darstellung eines erfindungsgemäßen Probenehmers in einer Schnittansicht in Längsrichtung des Probenehmers;
- Fig. 2: eine weitere schematische Darstellung eines erfindungsgemäßen Probenehmers von Fig. 1 in einer Schnittansicht in Längsrichtung des Probenehmers in einem teilweise demontierten Zustand;
- Fig. 3a-c: schematische Darstellungen des erfindungsgemäßen Probenehmers in unterschiedlichen Stellungen in jeweiligen perspektivischen Ansichten; und
- Fig. 4a-c: schematische Darstellungen des erfindungsgemäßen Probenehmers in unterschiedlichen Zuständen in jeweiligen Schnittansichten.

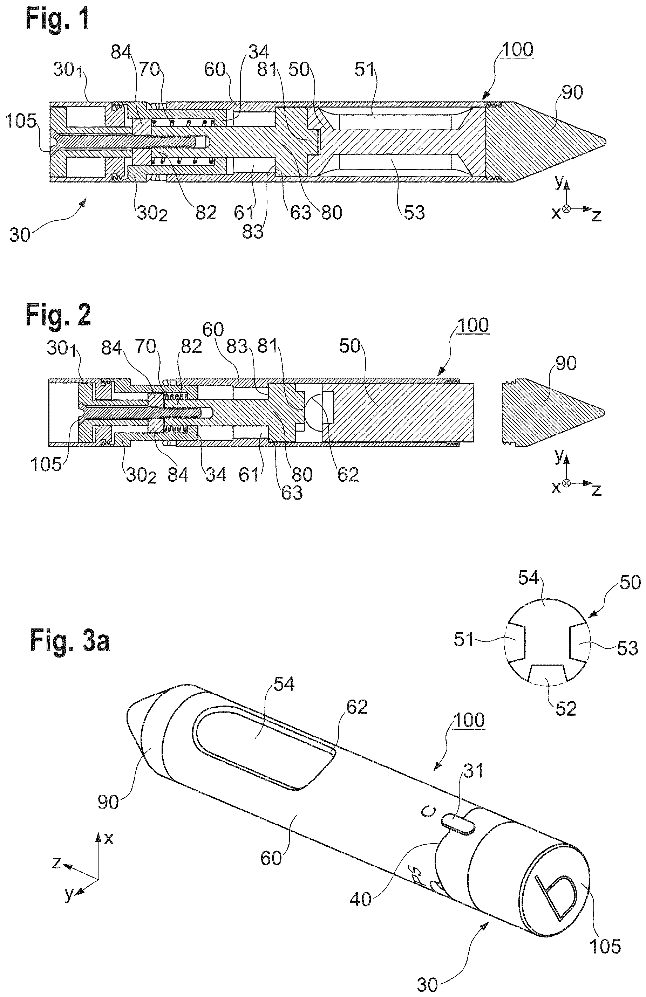

Fig. 1 zeigt eine schematische Darstellung eines erfindungsgemäßen Probenehmers 100 in einer Schnittansicht in Längsrichtung bzw. in Richtung einer Längsachse des Probenehmers 100 (entsprechend einer z-Achse des dargestellten x-y-z-Koordinatensystems), während Fig. 2 eine weitere schematische Darstellung des erfindungsgemäßen Probenehmers 100 von Fig. 1 in einer Schnittansicht in Längsrichtung des Probenehmers 100 in einem teilweise demontierten Zustand zeigt. Weiterhin zeigen die Fig. 3a-c schematische Darstellungen des erfindungsgemäßen Probenehmers 100 in unterschiedlichen, nachstehend noch näher beschriebenen Stellungen bzw. Griffstellungen in jeweiligen perspektivischen Ansichten.

Der erfindungsgemäße Probenehmer 100 ist zur Entnahme einer Probe, beispielsweise einer flüssigen, pulverförmigen oder granulatförmigen Probe, eingerichtet und umfasst im Wesentlichen ein längliches Probenaufnahmeelement 50, ein hohlzylindrisches Rohrelement 60, einen Griff 30 und einen Verriegelungsmechanismus mit einem Vorspannmechanismus.

Wie insbesondere in Fig. 1 gut erkennbar ist, sind an dem Rohrelement 60 an dessen einem Ende der Griff 30 und an dessen anderem Ende ein demontierbarer Spitzenabschnitt 90 vorgesehen (siehe beispielsweise auch Fig. 2), wobei der Spitzenabschnitt 90 bestimmungsgemäß bei Entnahme der Probe zuerst in die die Probe enthaltende Probenmenge eingeführt wird.

Das Probenaufnahmeelement (Innenrohr) 50 ist länglich bzw. stabförmig mit kreisförmigem Querschnitt bzw. zumindest abschnittsweise in Form eines (Voll-)Zylinders ausgebildet. In diesem Ausführungsbeispiel weist das Probenaufnahmeelement 50 mehre in Umfangsrichtung beabstandet und in Längsrichtung in gleicher axialer Anordnung angeordnete Probenaufnahmekammern 51, 52 und 53 und zumindest einen Verschlussabschnitt 54 auf, wie aus den Fig. 3a-c anhand der Querschnittsansicht des Probenaufnahmeelements 50 veranschaulicht ist.

Jede Probenaufnahmekammer 51, 52 und 53 ist als eine längliche Aussparung in dem Probenaufnahmeelement 50, beispielsweise in Form einer länglichen Nut, insbesondere als eine Rundnut mit bestimmter Nuttiefe, ausgebildet.

Der Verschlussabschnitt 54 wird durch einen zylindersegmentartigen Abschnitt des Probenaufnahmeelements 50 zwischen zwei Probenaufnahmekammer 51 und 53 gebildet. Dadurch sind die Probenaufnahmekammer 51 und 52 sowie 52 und 53 in Umfangsrichtung in gleichem Abstand verteilt angeordnet, wobei die Probenaufnahmekammern 51 und 53 in Umfangsrichtung in einem größeren Abstand aufgrund des dazwischen angeordneten Verschlussabschnitts 54 angeordnet sind.

Das hohlzylindrische Rohrelement 60 weist im dargestellten Fall genau eine Öffnung 62 auf, die eine Umgebung des Rohrelements 60 mit einem zylindrischen Innenraum 61 des Rohrelements 60 verbindet.

In dem Innenraum 61 des Rohrelements 60 ist das Probenaufnahmeelement 50 aufgenommen und um eine Längsachse des Probenehmers 100 (entsprechend der dargestellten z-Achse des Koordinatensystems) derart drehbar gelagert, dass über eine Relativdrehung zwischen dem Probenaufnahmeelement (Innenrohr) 50 und dem Rohrelement (Außenrohr) 60 eine Probe über die Öffnung 62 in jede der Probenaufnahmekammern 51, 52 und 53 gelangen kann und die Öffnung 62 über den Verschlussabschnitt 54 verschlossen werden kann

Der manuell betätigbare Griff 30 umfasst einen ersten Griffabschnitt 30₁ und einen zweiten Griffabschnitt 30₂. Wie in Fig 1 und 2 gut erkennbar ist, sind der erste Griffabschnitt 30₁ und der zweite Griffabschnitt 30₂ jeweils hülsenförmig ausgebildet, wobei der erste Griffabschnitt 30₁ teilweise in dem zweiten Griffabschnitt 30₂ aufgenommen und fest mit diesem verbunden ist.

Im dargestellten Fall ist der Griff 30 mit dem Probenaufnahmeelement 50 derart gekoppelt, dass eine Drehbewegung des Griffs 30 um die Längsachse in eine Drehbewegung des Probenaufnahmeelements 50 umgesetzt bzw. übersetzt wird. Weiterhin ist der Griff 30 mit dem Probenaufnahmeelement 50 derart gekoppelt, dass eine Relativbewegung des Griffs 30 in Bezug auf das Probenaufnahmeelement 50 in die Längsrichtung bzw. in Richtung der Längsachse des Probenehmers 100 ermöglicht wird.

Die Umsetzung dieser relativen Beweglichkeit des Griffs 30 in Bezug auf das Probenaufnahmeelement 50, insbesondere im Zusammenspiel mit dem Verriegelungsmechanismus und dessen Vorspannmechanismus, wird nachfolgend noch im Detail erläutert

Der Verriegelungsmechanismus ist so ausgestaltet, dass er eine Drehbewegung des Griffs 30 in Bezug auf das Rohrelement (Außenrohr) 60 blockiert, wenn sich der Griff 30 in einer Verriegelungsstellung befindet, und eine Drehbewegung des Griffs 30 in Bezug auf Rohrelement 60 zulässt, wenn der Griff 30 von der Verriegelungsstellung in eine Zwischenstellung durch Relativbewegung des Griffs 30 in Bezug auf das Probenaufnahmeelement 50 oder das Rohrelement 60, d.h. weg von dem Probenaufnahmeelement 50 oder dem Rohrelement 60, in die Längsrichtung verstellt wird.

Um dies zu realisieren, weist der Verriegelungsmechanismus einen griffseitigen Verriegelungsvorsprung 31, der an dem zweiten Griffabschnitt 30₂ vorgesehen ist, und eine rohrelementseitige Steuerbahn 40 auf.

Die Steuerbahn 40 kann beispielsweise durch einen Randbereich des Rohrelements 60 an dessen griffseitigem Ende gebildet werden, mit dem der Verriegelungsvorsprung 31 in Berührung steht. Dabei legt die Steuerbahn 40 die Verriegelungsstellung fest, indem der Verriegelungsvorsprung 31 in eine Verriegelungsausnehmung 32 der Steuerbahn 40 eingreift bzw. eintritt (siehe insbesondere die Figu-ren 3b und 3c), welche einen Formschluss mit dem Verriegelungsvorsprung 31 in Umfangsrichtung des Griffs 30 bzw. des Rohrelements 60 bildet.

Hingegen wird eine Zwischenstellung 33 anhand der Steuerbahn 40 festlegt, indem der Verriegelungsvorsprung 31 auf zwischen jeweiligen Verriegelungsausnehmungen 32 angeordneten Abschnitten der Steuerbahn 30 in Umfangsrichtung des Griffs 30 bzw. des Rohrelements 60 gleitend geführt ist.

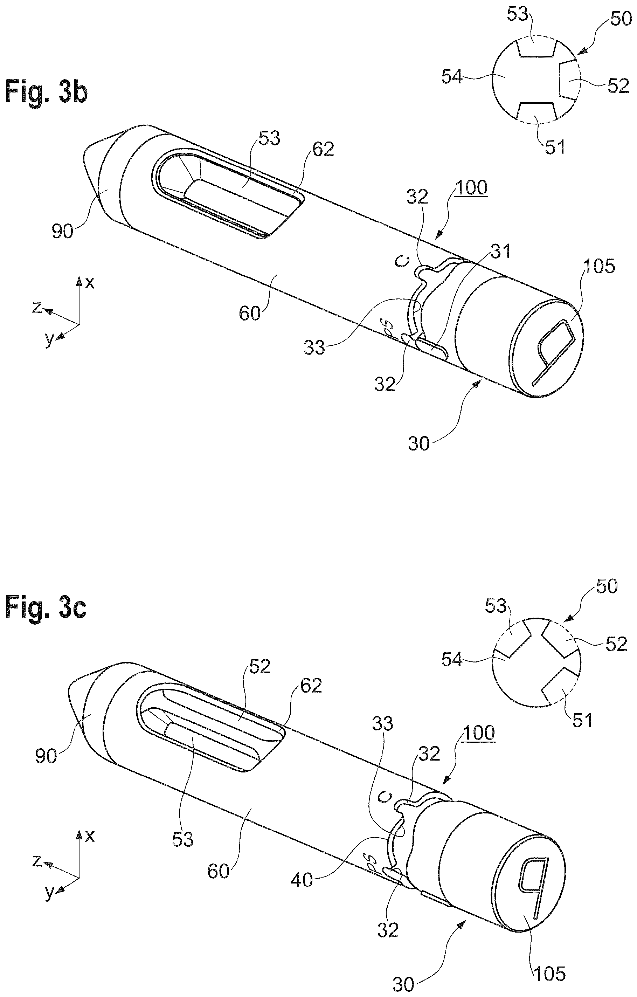

In dieser Ausführungsform weist der Verriegelungsmechanismus insbesondere vier Verriegelungsstellungen auf, eine erste Verriegelungsstellung für die Positionierung der ersten Probenaufnahmekammer 51 fluchtend zur Öffnung 62, eine zweite Verriegelungsstellung für die Positionierung der zweiten Probenaufnahmekammer 52 fluchtend zur Öffnung 62, eine dritte Verriegelungsstellung für die Positionierung der dritten Probenaufnahmekammern 53 fluchtend zur Öffnung 62 und eine vierte Verriegelungsstellung für die Positionierung des Verschlussabschnitts 54 fluchtend zur Öffnung 62 zum Verschließen der Öffnung 62, wie dies insbesondere den Fig. 3a-c entnommen werden kann. Dabei zeigt Fig. 3a insbesondere die vierte Verriegelungsstellen, bei der die Öffnung 62 verschlossen ist, während Fig. 3b die dritte Verriegelungsstellung zeigt, bei der die Probenaufnahmekammer 53 über die Öffnung 62 zugänglich ist. Fig. 3c zeigt hingegen einen Zustand des Probenehmers 100 in einer Zwischenstellung 33 zwischen der zweiten Verriegelungsstellung und der dritten Verriegelungsstellung des Probenehmers 100.

Die jeweiligen zwischen den Verriegelungsstellungen liegenden Zwischenstellungen erlauben ein Gleiten des Verriegelungsvorsprungs 31 auf der Steuerbahn 40.

Somit entspricht eine jeweilige Verriegelungsstellung einer Stellung des Griffs 30 zu dem Rohrelement 60, bei dem eine Probe über die Öffnung 62 in eine jeweilige Probenaufnahmekammer 51, 52, 53 gelangen kann oder die Öffnung 62 verschlossen ist.

Um den Griff 30 bzw. Verriegelungsvorsprung 31 in den jeweiligen Verriegelungsstellungen zu sichern bzw. zu halten, weist der Verriegelungsmechanismus den Vorspannmechanismus auf, der den Griff 30 in Richtung des Rohrelements 60 drängt bzw. vorspannt. Zu diesem Zweck wird der Vorspannmechanismus durch ein Verbindungselement 80, dem Griff 30 und ein Federelement 70 gebildet.

Das Verbindungselement 80 weist einen probenaufnahmeelementseitigen Endabschnitt 81 und einen griffseitigen Endabschnitt 82 auf.

Dabei ist der probenaufnahmeelementseitige Endabschnitt 81 mit dem Probenaufnahmeelement 50 drehfest verbunden und in dem Rohrelement 60 drehbeweglich gelagert und axial in Richtung des Griffs 30 unbeweglich festgelegt ist. Dies wird beispielsweise dadurch realisiert, dass das Rohrelement 60 einen dem Griff 30 abgewandten Absatz 63 an dessen Innenwandung aufweist, der mit einem dem Griff 30 zugewandten Absatz 83 des probenaufnahmeelementseitigen Endabschnitts 81 in Kontakt steht. Der Absatz 63 an der Innenwandung des Rohrelements 60 und der Absatz 83 des probenaufnahmeelementseitigen Endabschnitts 81 des Verbindungselements 80 bilden bei Anschlag somit einen Formschluss in Richtung zu dem Griff 30, nicht aber in die entgegensetzte Richtung.

Weiterhin ist der probenaufnahmeelementseitige Endabschnitt 81 drehfest mit dem Probenaufnahmeelement 50 über einen Formschluss verbunden; dieser Formschluss wird beispielswiese durch einen Vorsprung an dem probenaufnahmeelementseitige Endabschnitt 81, der in eine Ausnehmung des Probenaufnahmeelements 50 drehfest eingreift, hergestellt. Allerdings lässt sich das Probenaufnahmeelement 50 in Richtung der Längsachse von dem Formschluss lösen, wenn das Probenaufnahmeelement 50 von dem probenaufnahmeelementseitigen Endabschnitt 81 in axialer Richtung wegbewegt wird.

Der griffseitige Endabschnitt 82 des Verbindungselements 80 verläuft axial teilweise durch den zweiten Griffabschnitt 30₂ und ist in diesem aufgenommen.

Der griffseitige Endabschnitt 82 des Verbindungselements 80 wirkt mit dem zweiten Griffabschnitt 30₂ derart zusammen, dass der erste und zweite Griffabschnitt 30₁ und 30₂ axial beweglich und drehfest in Bezug auf das Verbindungselement 80 gelagert sind. Zwischen dem griffseitigen Endabschnitt 82 und dem zweiten Griffabschnitt 30₂ ist das Federelement 70 derart angeordnet, dass bei Relativbewegung zwischen dem griffseitigen Endabschnitt 82 und dem Griff 30 das Federelement 70 komprimiert oder expandiert werden kann.

Wie im in Fig. 1 gezeigten Fall ersichtlich ist, nimmt der zweiten Griffabschnitt 30₂ zu diesem Zweck das Verbindungselement 80 bzw. den griffseitigen Endabschnitt 82 des Verbindungselements 80 gleitend auf. Der griffseitige Endabschnitt 82 bildet einen Absatz 84 aus, so dass sich das Federelement 70 zwischen dem Absatz 84 des griffseitigen Endabschnitts 82 und einem durch den zweiten Griffabschnitt 30₂ gebildeten Absatz 34 abstützt. Der Absatz 84 des griffseitigen Endabschnitts 82 ist in axialer Richtung beweglich in dem zweiten Griffabschnitt 30₂ aufgenommen, aufgrund eines Formschlusses bzw. einer Verdrehsicherung aber nicht verdrehbar bzw. drehbar gegenüber dem zweiten Griffabschnitt 30₂. Beispielsweise können die Innenwandung des zweiten Griffabschnitts 30₂ und der Absatz 84 nach Art einer Polygonwellenführung ausgebildet sein, d.h. nach Art einer verdrehgesicherten Führung, bei der eine lineare Bewegung ermöglicht, aber eine Verdrehung verhindert wird.

Weiterhin weist der Griff 30 in dessen erstem Griffabschnitt 30₁ einen darin aufgenommenen Druckabschnitt 105 auf, der mit dem Verbindungselement 80 bzw. dem griffseitigen Endabschnitt 82 des Verbindungselements 80 starr verbunden ist, beispielsweise über eine Bolzenverschraubung, und relativ zu dem erstem Griffabschnitt 30₁ derart beweglich ist, dass bei Relativbewegung des Druckabschnitts 105 relativ zu dem erstem Griffabschnitt 30₁ in Richtung der Längsachse das Federelement 70 komprimiert oder expandiert werden kann.

Dementsprechend kann das Probenaufnahmeelement 50 bei demontierten Spitzenabschnitt 90 aus dem Rohrelement 60 durch Betätigen des Druckabschnitts 105 zumindest teilweise herausgeführt werden und sodann entnommen werden, wenn der Druckabschnitt 105 in Richtung des Rohrelements 60 und relativ zu diesem bewegt wird.

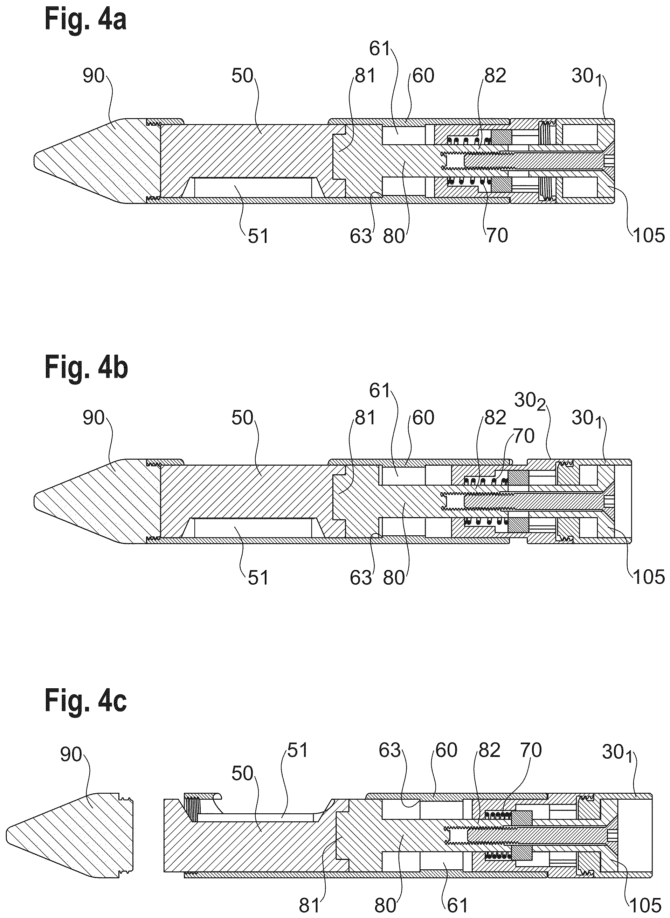

Zur besseren Veranschaulichung dieses Mechanismus werden nachfolgend die Fig. 4a-c herangezogen, welche schematische Darstellungen des erfindungsgemäßen Probenehmers 100 in unterschiedlichen Zuständen in jeweiligen Schnittansichten zeigen.

Fig. 4a zeigt einen Zustand des Probenehmers 100, der dem Zustand von Fig. 1 entspricht. D.h. der Probenehmer befindet sich im betriebsfähigen und voll montierten Zustand, wobei der Griff 30 sich in der Verriegelungsstellung befindet, in der der Verschlussabschnitt 54 die Öffnung verschließt.

Fig. 4b zeigt einen weiteren Zustand des Probenehmers 100, in dem der Griff 30 von dem Rohrelement 60 in Längsrichtung wegbewegt wird und in eine Zwischenstellung übergeführt wird. Dadurch wird die Feder 70 komprimiert, wie insbesondere aus dem im Vergleich zu Fig. 4a versetzten Druckabschnitt 105 erkennbar ist. D.h. der Griff 30 hat eine Relativbewegung zum Druckabschnitt 105 und dadurch zum Verbindungselement 80 vollzogen. Wird der Griff 30 losgelassen, entspannt sich die noch komprimierte Federelement 70 und bewegt den Griff 30 in Richtung zu dem Rohrelement 60.

Schließlich zeigt Fig. 4c einen weiteren Zustand des Probenehmers 100, bei dem der Spitzenabschnitt 90 des Probenehmers 100 demontiert ist und der Druckabschnitt 105 in Richtung des Rohrelements 60 relativ zu diesem in Längsrichtung bewegt wurde, so dass das Probeaufnahmeelement 50 aus dem Endabschnitt des Rohrelements 60 zumindest teilweise herausgeschoben ist. Dadurch lässt sich Probeaufnahmeelement 50 auf einfache Weise entnehmen und kann beispielsweise separat gereinigt werden.

Der Betrieb des Probenehmers 100 bzw. die Probenentnahme gestaltet sich demzufolge nach dem folgenden erfindungsgemäßen Probeentnahmeverfahren:
Zunächst wird der Probenehmer 100 in eine Probengesamtmenge eingeführt, während sich der Griff 30 in einer Verriegelungsstellung befindet, bei der die Öffnung 62 verschlossen ist.

Anschließend wird der Griff 30 in Längsrichtung relativ zu dem Probenaufnahmeelement 100 und durch Verdrehen in eine Zwischenstellung bewegt, um diesen dann weiter zu drehen, nämlich in eine weitere entsprechende Verriegelungsstellung, so dass eine der Probenaufnahmekammern 51, 52, 53 über die Öffnung zur Entnahme der Probe zugänglich ist. Dies kann so oft durchgeführt werden, bis jede Probeaufnahmekammer 51, 52, 53 mit einer Probe befüllt ist.

Ist eine jeweilige Probe in eine oder mehrere der Probeaufnahmekammern 51, 52, 53 eingebracht, wird der Griff 30 relativ zu dem Rohrelement 60 in eine weitere Verriegelungsstellung gedreht, bei der die Öffnung verschlossen ist.

Anschließend wird Probenehmer 100 aus der Probengesamtmenge herausgeführt.

Nach Durchführung einer Probenahme gemäß dem vorstehend beschriebenen Probenentnahmeverfahren kann das erfindungsgemäße Verfahren zur Reinigung des Probenehmers 100 durchgeführt werden. Danach wird der Spitzenabschnitt 90 zunächst von dem Rohrelement 60 entfernt. Anschließend wird der Druckabschnitt 105 des Griffs 30 relativ zu dem Rohrelement 60 bewegt, so dass sich der Druckabschnitt relativ zu dem Rohrelement 60 in Richtung des Probenaufnahmeelements 50 bewegt, wodurch das Probeaufnahmeelement 30 zumindest teilweise aus dem Rohrelement 60 herausgeschoben wird und entnommen werden kann, wie dies in Fig. 4c gezeigt ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Probenehmer (100) zur Entnahme einer Probe, vorzugsweise einer flüssigen, pulverförmigen oder granulatförmigen Probe, wobei der Probenehmer (100) aufweist:
ein längliches Probenaufnahmeelement (50), welches zumindest eine Probenaufnahmekammer (51) aufweist,
ein hohlzylindrisches Rohrelement (60), welches zumindest eine Öffnung (62) aufweist und das Probenaufnahmeelement (50) in einem Innenraum (61) um eine Längsachse des Probenehmers (100) derart drehbar gelagert aufnimmt, dass bei Relativdrehung zwischen dem Probenaufnahmeelement (50) und dem Rohrelement (60) eine Probe über die Öffnung (62) in die Probenaufnahmekammer (51) gelangen kann und/oder die Öffnung (62) verschlossen werden kann,
einen Griff (30), der mit dem Probenaufnahmeelement (50) derart gekoppelt ist, dass eine Drehbewegung des Griffs (30) um die Längsachse in eine Drehbewegung des Probenaufnahmeelements (50) umgesetzt wird, und weiterhin derart mit dem Probenaufnahmeelement (50) gekoppelt ist, dass eine Relativbewegung des Griffs in Bezug auf das Probenaufnahmeelement (50) in Richtung der Längsachse ermöglicht wird, und
einen Verriegelungsmechanismus, der eingerichtet ist, eine Drehbewegung des Griffs (30) in Bezug auf Rohrelement (60) zu blockieren, wenn sich der Griff (30) in einer Verriegelungsstellung befindet, und weiter eingerichtet ist, eine Drehbewegung des Griffs (30) in Bezug auf Rohrelement (60) zuzulassen, wenn der Griff (30) von der Verriegelungsstellung in eine Zwischenstellung durch Relativbewegung des Griffs in Bezug auf das Probenaufnahmeelement (50) und/oder das Rohrelement (60) in Richtung der Längsachse verstellt wird.

2. Probenehmer (100) nach Anspruch 1, wobei der Verriegelungsmechanismus einen griffseitigen Verriegelungsvorsprung und eine rohrelementseitige Steuerbahn aufweist, wobei die Steuerbahn die Verriegelungsstellung festlegt, indem der Verriegelungsvorsprung in eine Verriegelungsausnehmung der Steuerbahn eingreift, und die Zwischenstellung festlegt, indem der Verriegelungsvorsprung auf der Steuerbahn gleitend geführt wird.

3. Probenehmer nach Anspruch 1 oder 2, wobei der Verriegelungsmechanismus mehrere Verriegelungsstellungen und jeweilige zwischen den Verriegelungsstellungen liegende Zwischenstellungen festlegt, wobei eine jeweilige Verriegelungsstellung einer Stellung des Griffs zu dem Rohrelement (60) entspricht, bei dem eine Probe über die Öffnung (62) in die Probenaufnahmekammer (51) gelangen kann oder die Öffnung (62) verschlossen ist.

4. Probenehmer (100) nach einem der Ansprüche 1 bis 3, wobei das Probenaufnahmeelement (50) in Umfangsrichtung beabstandet und Längsrichtung in gleicher axialer Anordnung mehrere Probenaufnahmekammern (51) und zumindest einen Verschlussabschnitt aufweist.

5. Probenehmer (100) nach einem der Ansprüche 1 bis 4, wobei der Verriegelungsmechanismus einen Vorspannmechanismus aufweist, der zumindest abschnittsweise den Griff in Richtung des Rohrelements (60) vorspannt.

6. Probenehmer (100) nach Anspruch 5, wobei der Vorspannmechanismus durch ein Verbindungselement (80), einen Griffabschnitt (30₂) des Griffs und ein Federelement (70) gebildet wird,
wobei das Verbindungselement (80) einen probenaufnahmeelementseitigen Endabschnitt (81) und einen griffseitigen Endabschnitt (82) aufweist,
wobei der probenaufnahmeelementseitige Endabschnitt (81) mit dem Probenaufnahmeelement (50) drehfest verbunden ist und in dem Rohrelement (60) drehbeweglich gelagert und axial in Richtung des Griffs unbeweglich festgelegt ist,
wobei der griffseitige Endabschnitt (82) mit dem Griffabschnitt (30₂) derart zusammenwirkt, dass der Endabschnitt (82) axial beweglich und drehfest in Bezug auf den Griffabschnitt (30₂) gelagert ist und zwischen dem griffseitigen Endabschnitt (82) und einem Absatz (34) des Griffabschnitts (30₂) das Federelement (70) derart angeordnet ist, dass bei Relativbewegung zwischen dem griffseitigen Endabschnitt (82) und dem Griffabschnitt (30₂) das Federelement (70) komprimiert oder expandiert werden kann.

7. Probennehmer (100) nach Anspruch 6, wobei der Griff (30) weiter einen Druckabschnitt aufweist, der mit dem Verbindungselement (80) starr verbunden ist und relativ zu dem Griff derart beweglich ist, dass bei Relativbewegung des Druckabschnitts relativ zu dem Griff das Federelement (70) komprimiert oder expandiert wird.

8. Probenehmer (100) nach einem der Ansprüche 1 bis 7, wobei das Rohrelement (60) an einem Ende mit dem Griff (30) und an einem anderen Ende mit einem demontierbaren Spitzenabschnitt (90) vorgesehen ist, der bestimmungsgemäß bei Entnahme der Probe zuerst in die die Probe enthaltende Probenmenge eingeführt wird, wobei das Probenaufnahmeelement (50) bei demontierten Spitzenabschnitt (90) aus dem Rohrelement (60) entnehmbar ist.

9. Probenentnahmeverfahren zur Entnahme einer Probe, insbesondere einer flüssigen, pulverförmigen oder granulatförmigen Probe, aus einer Probengesamtmenge unter Verwendung eines Probenehmers (100) gemäß einem der Ansprüche 1 bis 8, wobei das Verfahren die folgenden Schritte aufweist:
Einführen des Probenehmers (100) in die Probengesamtmenge, während sich der Griff in der Verriegelungsstellung befindet und Öffnung verschlossen ist,
Bewegen des Griffs (30) zumindest in Richtung der Längsachse relativ zu dem Probenaufnahmeelement in eine Zwischenstellung;
Drehen des Griffs (30) in eine weitere Verriegelungsstellung, so dass die Probenaufnahmekammer über die Öffnung zur Entnahme der Probe zugänglich ist;
Einbringen der Probe in die Probeaufnahmekammer (51);
Bewegen des Griffs (30) zumindest in Richtung der Längsachse relativ zu dem Probenaufnahmeelement in eine Zwischenstellung;
Drehen des Griffs (30) relativ zu dem Rohrelement, so dass die Öffnung verschlossen ist oder eine weitere Probenaufnahmekammer über die Öffnung zur Entnahme der Probe zugänglich ist.

10. Verfahren zum Reinigen eines Probenehmers (100) gemäß einem der Ansprüche 1 bis 8, insbesondere zum Reinigen des Probenehmers (100) nach Durchführung einer Probenahme gemäß dem Probenentnahmeverfahren nach Anspruch 9, wobei das Verfahren die folgenden Schritte aufweist:
Drücken des Druckabschnitts des Griffs (30), so dass sich der Druckabschnitt relativ zu dem Rohrelement (60) in Richtung des Rohrelements (60) bewegt, wodurch das Probeaufnahmeelement zumindest teilweise aus dem Rohrelement herausgeschoben wird.

11. Probenehmer (100) zur Entnahme einer Probe, vorzugsweise einer flüssigen, pulverförmigen oder granulatförmigen Probe, wobei der Probenehmer (100) aufweist:
ein längliches Probenaufnahmeelement (50), welches zumindest eine Probenaufnahmekammer (51) aufweist,
ein hohlzylindrisches Rohrelement (60), welches zumindest eine Öffnung (62) aufweist und das Probenaufnahmeelement (50) in einem Innenraum (61) um eine Längsachse des Probenehmers (100) derart drehbar gelagert aufnimmt, dass bei Relativdrehung zwischen dem Probenaufnahmeelement (50) und dem Rohrelement (60) eine Probe über die Öffnung (62) in die Probenaufnahmekammer (51) gelangen kann und/oder die Öffnung (62) verschlossen werden kann,
einen Griff (30), der mit dem Probenaufnahmeelement (50) derart gekoppelt ist, dass eine translatorische relative Bewegung des Griffs (30) entlang der Längsachse in Bezug auf das Probenaufnahmeelement (50) in eine Drehbewegung des Probenaufnahmeelements (50), vorzugsweise mittels eines Gewindetriebs mit zumindest teilweise als Gewindewelle ausgebildetem Griff (30) und zumindest teilweise als Innengewindespindel ausgebildetem Probenaufnahmeelement (50), umgesetzt wird.
